# EUROPÄISCHE PATENTSCHRIFT

(11) **EP 1 989 873 B1**
(45) Veröffentlichungstag und Bekanntmachung des Hinweises auf die Patenterteilung: **04.04.2012**
(21) Anmeldenummer: 07704572.2
(22) Anmeldetag: 14.02.2007
(51) Int. Cl.: H04N 1/58

(54) **VERFAHREN UND VORRICHTUNG ZUM VERARBEITEN EINES DRUCKDATENSTROMS ZUM ERZEUGEN MEHRFARBIGER DRUCKBILDER MIT HILFE EINES HOCHLEISTUNGSDRUCKSYSTEMS**
METHOD AND DEVICE FOR PROCESSING A PRINT DATA FLOW FOR PRODUCING MULTICOLOR PRINTED IMAGES USING A HIGH PERFORMANCE PRINTING SYSTEM
PROCEDE ET DISPOSITIF DE TRAITEMENT D'UN TRAIN DE DONNEES D'IMPRESSION POUR LA PRODUCTION D'IMAGES IMPRIMEES MULTICOLORES AU MOYEN D'UN SYSTEME D'IMPRESSION A HAUT RENDEMENT

(30) Priorität: 24.02.2006 DE 102006008768
(43) Veröffentlichungstag der Anmeldung: 12.11.2008
(73) Patentinhaber: OCÉ Printing Systems GmbH, 85586 Poing (DE)
(72) Erfinder: SIEMENS, Rüdiger, 81825 München (DE); WEINER, Helmut, 81371 München (DE); KURMANN, Olga, 81379 München (DE); KAUFMANN, Karl, 85586 Poing (DE)
(74) Vertreter: Schaumburg, Thoenes, Thurn, Landskron, Eckert
(86) Internationale Anmeldenummer: PCT/EP2007/051435
(87) Internationale Veröffentlichungsnummer: WO 2007/096283

(56) Entgegenhaltungen:
- EP-A- 1 612 728
- WO-A-95/20796
- DE-A1- 19 623 327

## Beschreibung

Die Erfindung betrifft Verfahren und Vorrichtungen zum Verarbeiten eines Druckdatenstroms, der zum Erzeugen von Druckbildern mit mindestens zwei Grundfarben mit Hilfe eines Hochleistungsdrucksystems dient.

Mehrfarbige mit Hilfe eines Hochleistungsdruckers auszůgebende Druckbilder, wie z.B. Fotografien, Farbgrafiken oder mehrfarbiger Text, werden mit Hilfe von in einem Druckdatenstrom enthaltenen Druck- und/oder Bilddaten beschrieben. Die Druck-und/oder Bilddaten spezifizieren Farbauszüge üblicher Grundfarben, die von Hochleistungsdruckern zur Bilderzeugung genutzt werden. Solche Hochleistungsdrucker haben entsprechend dem CMYK-Farbmodell die Grundfarben Cyan (Cyan), Magenta (Magenta), Gelb (Yellow), Schwarz (Black) sowie gegebenenfalls eine oder mehrere Sonderfarben, wie z.B. den Océ Custom Tone-farben der Anmelderin. Verschiedene Hochleistungsdrucker sind z.B. in der Veröffentlichung "The world of printers, Technologies of Océ Printing Systems", Dr. Gerd Goldmann (Hrsg.), Océ Printing Systems GmbH, Poing, Ed. 7 (2002) beschrieben. Insbesondere sind auf den Seiten 249-286 verschiedene Offsetund Digitaldrucktechnologien beschrieben. Auf den Seiten 287-325 sind verschiedene digitale Farbdrucksysteme beschrieben, auf den Seiten 233-248 sind Grundlagen des Mehrfarbendrucks und auf den Seiten 209-232 sind Grundlagen digitaler Bildverarbeitung beschrieben. Ferner sind auf den Seiten 246-248 Prinzipien des Highlight Colour Printing beschrieben.

Aus der nicht-veröffentlichten internationalen Patentanmeldung PCT/EP 2005/057147 (internes Aktenzeichen der Anmelderin 2004-1204P) sind ein Verfahren und ein Drucksystem zum Trapping von Bilddaten bekannt.

Aus dem Dokument US 6,377,711 B1 sind Verfahren und Systeme zum Trapping von Rasterbildern entlang horizontaler, vertikaler oder diagonaler Richtungen bekannt, die nur Kanten diagonal benachbarter Bildpunkte zum Trapping nutzen.

Aus dem Dokument WO 03/065197 A2 sind ein Verfahren und eine Vorrichtung zum automatisierten Annehmen und Weiterleiten von Dokumentenbearbeitungsaufträgen bekannt. Dabei wird insbesondere ein Verzeichnis genutzt, um die Druckdaten eines Druckauftrags in diesem Verzeichnis zwischenzuspeichern. Die in diesem Verzeichnis gespeicherten Druckdaten werden dann weiterverarbeitet. Eine solche Funktionalität hat beispielsweise das Dokumentenmanagementsystem "Prisma Production" der Firma Océ Printing Systems, das ebenfalls in der oben genannten Veröffentlichung "World of printers, Technologie of Océ Printing Systems" beschrieben ist. Hochleistungsdrucksysteme, deren Druckgeschwindigkeit etwa 40 Seiten bis zu über 1000 Seiten DIN A4 pro Minute beträgt, verarbeiten vorzugsweise Druckdatenströme, wie z.B. auf einer Page Command Language (PCL) basierenden Druckdatenstrom, einem Advanced Function Presentation (AFP) Druckdatenstrom oder einem dem AFP-Druckdatenstrom entsprechenden druckerseitigen Intelligent Printer Data Stream (IPDS), genutzt. Das AFP-Datenformat eines AFP-Datenstroms ist von der Firma International Business Machines Corp. (IBM) entwickelt worden. Ein weiterer bei Hochleistungsdruckern verbreiteter Druckdatenstromstandard ist der Line Condition Data Stream (LCDS) der Firma Xerox Corp.

Details des Dokumentendatenstroms AFP™ sind in der Publikation Nr. F-544-3884-01, herausgegeben von der Firma International Business Machines Corp. (IBM) mit dem Titel "AFP Programming Guide and Line Data Reference" beschrieben. Der Dokumentendatenstrom AFP wurde weiterentwickelt zu dem Dokumentendatenstrom MO:DCA™, welcher z. B. in der IBM-Publikation SC31-6802-06 (Januar 2004) mit dem Titel "Mixed Object Document Content Architecture Reference" beschrieben ist. Details dieses Datenstroms sind auch in der US-A-5,768,488 beschrieben.

AFP/MO:DCA-Datenströme werden im Zuge von Druckproduktionsaufträgen häufig in Datenströme des Intelligent Printer Data Stream™ (IPDS™) umgewandelt. In der US-A-5,982,997 ist ein solcher Prozeß gezeigt. Details zu IPDS Datenströmen sind z. B. im IBM-Dokument Nr. S544-3417-06, "Intelligent Printer Data Stream Reference", 7. Ausgabe (Nov. 2002) beschrieben.

Hochleistungsdrucker führen zum Erzeugen von Rasterbildern einzelner Farbauszüge einen Rasterbildprozess vorzugsweise mit einem separaten Raster Image Processor (RIP) durch. Dieser Raster Image Processor kann als Hardware oder Software realisiert sein. Aus dem Dokument WO 02/093353 A1 ist ein in ein Output Managementsystem integrierter Raster Bildprozess bekannt, mit dessen Hilfe bereits in der Druckvorbereitung zum Überprüfen der einzelnen Farbauszüge Rasterbilder in gleicher Weise erzeugt werden können, wie mit Hilfe eines im Drucker angeordneten Rasterbildprozessors.

Aus dem Dokument US 2005/0219631 A1, US 6,594,034 B1, US 5,581,667 A und EP 0 833 216 A2 sind Verfahren und Vorrichtungen zum elektronischen Trapping von Rasterbildern bekannt. Aus dem Dokument WO 95/20796 und US 5,667,543 A ist ein Trapping von durch Postscript oder eine andere Seitenbeschreibungssprache (PDL) beschriebenen Druckbildern bekannt. Weitere Verfahren zum Trapping sind aus den Dokumenten DE 199 12 511 A1, US 6,813,042 B2, EP 0 929 189 A2, JP 2004-262011A und US 6,441,914 B1 bekannt.

Die in den oben genannten Publikationen bzw. Dokumenten beschriebenen Verfahren, Systeme und Maßnahmen können in Verbindung mit der vorliegenden Erfindung Anwendung finden.

Trapping bedeutet allgemein ein Überfüllen einzelner mit Hilfe einer Grundfarbe einzufärbender Bereiche und somit ein Überfüllen der einzufärbenden Bereiche einzelner Farbauszüge. An der Grenzlinie zweier aneinandergrenzender einzufärbender Bereiche können bei ungenauer Positionierung von zwei nacheinander umgedruckter Farbauszüge nicht eingefärbte Bereiche entstehen, durch die dann die Farbe des Trägermaterials im fertigen Druckbild zu sehen ist. Um dies zu vermeiden, wird mit Hilfe eines Trapping-Verfahrens der mit Hilfe einzelner Grundfarben einzufärbende Bereich vergrößert, so dass diese Bereiche überfüllt werden. Bei einer in der Praxis nicht durchführbaren optimalen Positionierung mehrerer Farbauszüge übereinander würden durch das Trapping in den Randbereichen aneinandergrenzender einzufärbender Bereiche verschiedener Farbauszüge gleichmäßige Überlappungen erzeugt werden. In der Praxis werden durch die nicht 100%-ig genaue Positionierung der einzelnen Farbauszüge übereinander unterschiedliche Überlappungsbreiten erreicht. Je nach Erfordernis, d.h. je nach der Ungenauigkeit eines Druckers beim Positionieren einzelner Farbauszüge übereinander, wird der Grad der durchzuführenden Vergrößerung der einzufärbenden Bereiche der einzelnen Farbauszüge, d.h. der Grad des Überfüllens, gewählt, so dass keine Bereiche im Druckbild zu erwarten sind, die in einem Bereich, an dem eingefärbte Bereiche verschiedener Farbauszüge aneinandergrenzen, nicht oder nur unzureichend eingefärbt sind.

Die aus dem Stand der Technik bekannten Verfahren zur Verbesserung der Bildqualität eines auszugebenden Bildes, insbesondere die aus dem Stand der Technik bekannten Trapping-Verfahren, sind zur Verwendung in Verbindung mit AFP-, LCDS-und PCL-Druckdatenströmen nicht geeignet, da diese Druckdatenströme die Übertragung von Trapping-Informationen nicht unterstützen. Ferner ist es wünschenswert, ein durchzuführendes Verfahren zur Bildverbesserung flexibler an die Erfordernisse eines ausgewählten Druckers anzupassen und diese Anpassung auch zu einem späteren Zeitpunkt erforderlichenfalls ändern zu können. Somit ist ein Trapping derzeit bei den genannten und weiteren Druckdatenströmen für Hochgeschwindigkeitsdrucksysteme nicht möglich, wenn bereits druckaufbereitete Druckdatenströme vorliegen. Somit können durch Ungenauigkeiten beim Positionieren der einzelnen zu erzeugenden Farbauszüge auf einem zu bedruckenden Trägermaterial oder einem Zwischenbildträger bei bekannten Hochleistungsdrucksystemen nicht eingefärbte Bereiche nicht sicher vermieden werden. Diese nicht eingefärbten Bereiche sind im fertigen auf dem Trägermaterial erzeugten Druckbild störend sichtbar.

Es sind Drucksysteme bekannt, bei denen für Postscript- und PDF-Druckdatenströme ein Trapping im Controller des Druckers durchgeführt wird. Bei Hochgeschwindigkeitsdrucksystemen ist ein solches Trapping jedoch in Echtzeit nur mit erheblichem zusätzlichem Aufwand möglich.

Aus dem Dokument EP 1 612 728 A3 sind ein Verfahren und ein System zur Bearbeitung von seitenweise gerasterten Bilddaten zur Erzeugung eines elektronischen Dokuments bekannt.

Aus dem Dokument DE 196 23 327 A1 ist ein Verfahren zur Bearbeitung von Druckseiten mit Hilfe einer die Objekte der Druckseite kennzeichnenden Contone-Map bekannt.

Aufgabe der Erfindung ist es, Verfahren und Vorrichtungen zum Verarbeiten eines Druckdatenstroms anzugeben, bei denen eine Verbesserung der Qualität der mit Hilfe eines Hochleistungsdrucksystems auszubildenden Druckbilder einfach und flexibel möglich ist.

Diese Aufgabe wird durch ein Verfahren mit den Merkmalen des Patentanspruchs 1, 2 oder 16 sowie durch eine Vorrichtung mit den Merkmalen des Patentanspruchs 18, 19 oder 20 gelöst. Vorteilhafte Weiterbildungen der Erfindung sind in den abhängigen Patentansprüchen angegeben.

Durch die erfindungsgemäßen Verfahren und Vorrichtungen zum Verarbeiten eines Druckdatenstroms wird erreicht, dass verschiedene Verfahren zur Verbesserung des Druckbildes auch bei Druckern und Datenströmen durchgeführt werden können, die diese Bildverbesserungsfunktionen an sich nicht unterstützen. Insbesondere ist ein Trapping von Rasterbildern auch bei Druckdatenströmen, wie z.B. dem AFP-, LCDS- und PCL-Druckdatenströmen, möglich.

Bei einigen Ausführungsformen der Erfindung werden die Trapping-Informationen, die zur Verbesserung des Druckbildes dienen, einem Druckdatenstrom zusätzlich zu den bereits im Druckdatenstrom enthaltenen Druckdaten hinzugefügt, so dass die ursprünglichen Druckdaten nicht verloren gehen. Dadurch ist eine flexible Nutzung und Weiterverarbeitung der Druckdaten sowie der zusätzlichen Trapping-Informationen einfach möglich. Somit kann jederzeit auf die ursprünglichen Druckdaten zurückgegriffen werden, wodurch auch bei einer Änderung der Anforderungen an die Trapping-Informationen zur Druckbildverbesserung mit Hilfe der unveränderten Ursprungsdruckdaten eine alternative oder zusätzliche Verarbeitung dieser Ursprungsdruckdaten erfolgen kann. Somit kann auf geänderte Ausgabe- und Druckeigenschaften, insbesondere bei einem Druckerwechsel und bei anderem Trägermaterial, flexibel reagiert werden, indem beispielsweise neue zusätzliche Trapping-Informationen erzeugt werden, die an die geänderten Ausgabe-und Druckeigenschaften angepasst sind.

Ferner können bei weiteren Ausführungsformen der Erfindung mehrere alternative. Trapping-Informationen erzeugt werden, und in den Ausgangsdruckdatenstrom integriert werden. Die Trapping-Informationen sind beispielweise Bildinformationen. Die alternativen Bildinformationen werden vorzugsweise mit verschiedenen Parametern oder Parametersätzen erzeugt. Je nach Ausgabe- und Druckeigenschaften eines zur Ausgabe der den Druckdaten entsprechenden Druckbildern ausgewählten Druckers wird eine dieser alternativen Bildinformationen bzw. ein Satz dieser Bildinformationen ausgewählt die bzw. der für diesen Drucker besonders geeignet ist. Dadurch können DruckJobs einfach und flexibel von einem Drucker auf einen anderen Drucker umgeleitet werden, wobei vorzugsweise ein Druckertreiber jeweils eine geeignete Bildinformation für den jeweiligen Drucker auswählt und zur Ausgabe der Druckdaten verwendet. Der Verarbeitungsaufwand, insbesondere der Rechenaufwand im Controller des Druckers, zum Erzeugen der Bildinformationen bzw. der Trapping-Informationen kann erheblich reduziert werden oder entfallen.

Dies ist insbesondere dadurch möglich, dass die Bildinformationen in einer Druckvorstufe, insbesondere in einem Output Management System und/oder einem Druckserver erzeugt werden. Eine solche Druckvorstufe wird auch als Pre-Press bezeichnet.

Mit Hilfe der erfindungsgemäßen Verfahren und Vorrichtungen ist somit eine Verbesserung der Darstellung, insbesondere mehrfarbiger Druckbilder, einfach und flexibel möglich. Insbesondere ist ein Trapping auch für Druckdatenströme und Drucker möglich, die eine solche Funktion an sich nicht unterstützen. Das Trapping wird vorzugsweise rasterbildbezogen, d.h. bildpunktbezogen, durchgeführt. Dazu wird für jede Grundfarbe des Druckers ein Farbauszug erzeugt, der die zum Trapping mit dieser Grundfarbe einzufärbenden Bereiche festlegt. Diese Trapping-Rasterbilder werden dann dem Druckdatenstrom hinzugefügt, der die Druckdaten des Eingangsdatenstroms sowie zumindest die Rasterbilder mit den Trapping-Informationen und/oder Rasterbilder mit Druckbildern zur Verbesserung des Gesamtdruckbildes enthält und als Ausgangsdatenstrom ausgeben wird.

Die vorliegende Erfindung eignet sich besonders als Computerprogramm, d. h. als Software, realisiert zu werden, die bzw. das von einer Datenverarbeitungsanlage abgearbeitet wird. Die Datenverarbeitungsanlage ist vorzugsweise ein Druckserver oder eine andere Datenverarbeitungsanlage einer Druckvorstufe. Das Computerprogramm veranlasst die Datenverarbeitungsanlage Verfahrensschritte eines erfindungsgemäßen Verfahrens auszuführen und einen Druckdatenstrom derart anzupassen, dass eine Verbesserung eines auf einem Druck- oder Kopierersystem durch diesen Druckdatenstrom zu erzeugenden Druckbildes erfolgt. Ein solches Computerprogramm kann als Computerprogrammprodukt, insbesondere als ein auf einem austauschbaren Datenträger gespeichertes Computerprogrammprodukt und/oder als ein über ein Netzwerk übertragbares Computerprogrammprodukt, angeboten und vertrieben werden.

Zum besseren Verständnis der vorliegenden Erfindung wird im Folgenden auf die in den Zeichnungen dargestellten bevorzugten Ausführungsbeispiele Bezug genommen, die an Hand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und den Verfahren sowie derartige weitere Anwendungen der Erfindung, wie sie darin aufgezeigt sind, als übliches derzeitiges oder künftiges Fachwissen eines zuständigen Fachmanns angesehen werden. Die Figuren zeigen Ausführungsbeispiele der Erfindung, nämlich:
- Figur 1: ein Blockdiagramm zum Erzeugen, erfindungsgemäßen Verarbeiten und Ausgeben eines Druckdatenstroms;
- Figur 2: ein Blockdiagramm zum Verarbeiten des Druckdatenstroms in einem als Druckvorstufe dienenden Druckservers;
- Figur 3: eine Übersicht über die beim Verarbeiten des Druckdatenstroms erzeugten Daten gemäß einer ersten Ausführungsform der Erfindung;
- Figur 4: eine Übersicht der beim Verarbeiten des Druckdatenstroms erzeugten Daten gemäß einer zweiten Ausführungsform der Erfindung;
- Figur 5A: den schematischen Aufbau eines erfindungsgemäßen AFP-Druckdatenstroms;
- Figur 5B: den schematischen Aufbau eines erfindungsgemäßen PCL-Druckdatenstroms;
- Figur 6: ein Blockdiagramm zur Auswahl der Verarbeitungsparameter und zum Verarbeiten eines AFP-Druckdatenstroms in einer Druckvorstufe gemäß einer dritten Ausführungsform der Erfindung;
- Figur 7: ein Blockdiagramm zur Auswahl der Verarbeitungsparameter und zum Verarbeiten eines AFP-Druckdatenstroms in einer Druckvorstufe gemäß einer vierten Ausführungsform der Erfindung;
- Figur 8: einen Ablaufplan zum Erzeugen eines Druckdatenstroms mit Trapping-Informationen gemäß einer fünften Ausführungsform der Erfindung;
- Figur 9: einen Ablaufplan zum druckerabhängigen Trapping eines Druckdatenstroms mit Trapping-Informationen gemäß einer sechsten Ausführungsform der Erfindung; und
- Figur 10: einen Ablaufplan zum Erzeugen eines Druckdatenstroms mit mehreren alternativen Trapping-Informationen.

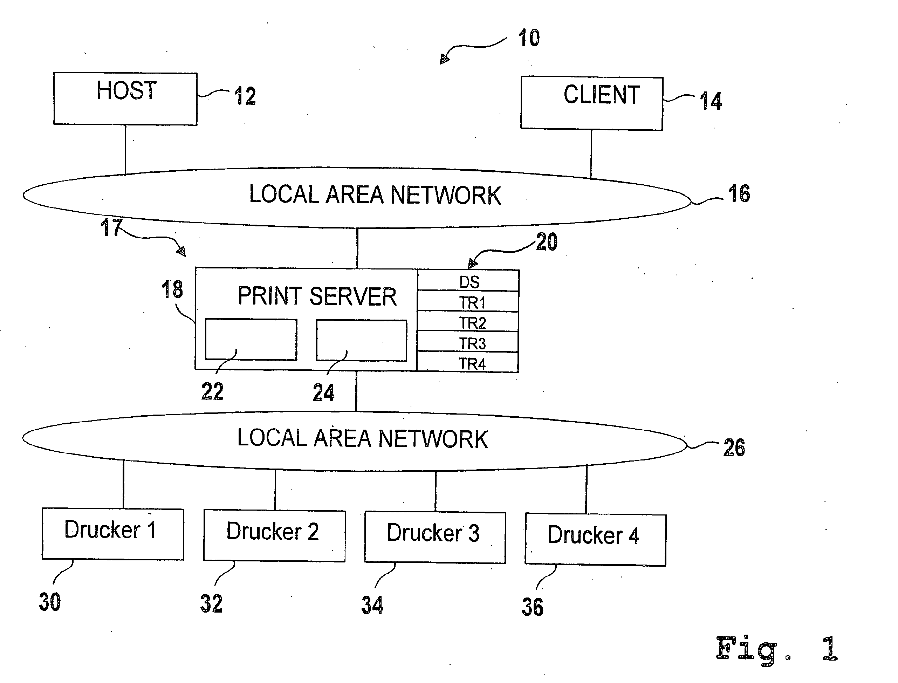

In Figur 1 ist ein Blockdiagramm eines Systems 10 zum Erzeugen, Verarbeiten und Ausgeben eines Druckdatenstroms gezeigt. Das System 10 umfasst einen Host-Computer 12 und einen Client-Computer 14, die über ein lokales Netzwerk (LAN) 16 mit einer Druckvorstufe 17 verbunden sind. Die Druckvorstufe 17 umfasst einen Druckserver 18 und einen mit dem Druckserver 18 verbundenen oder im Druckserver 18 integrierten Speicher 20 zum Speichern von Druckdaten. Der Druckserver 18 sowie der Speicher 20 können in ein Output Management System eingebunden sein. Solche Output Management Systeme dienen zur Steuerung der Druckausgabe in Unternehmen und Druckzentren. Die Output Management Systeme sind zur Entgegennahme von Dokumenten aus verschiedenen Eingangssystemen 12, 14 geeignet und können Dokumente mit weiteren Elementen, wie z.B. Logos und Unterschriften anreichern. Die Output Management Systeme übernehmen vorzugsweise die Produktionsplanung und Produktionssteuerung für die verfügbaren Drucksysteme sowie die Verteilung der Druckaufträge auf die verschiedenen Drucksysteme.

Die Output Management Systeme führen beispielsweise eine Bündelung einzelner Druckaufträge sowie eine Lastverteilung (Load Balancing) zwischen den verfügbaren Drucksystemen durch. Ferner können die Output Management Systeme ein Farbmanagement für unterschiedliche Drucksysteme durchführen. Output Management Systeme dienen ferner zur Druckerüberwachung und zur Ressourcenüberwachung der Ressourcen der einzelnen Drucksysteme. Ein solches Output Management System ist beispielsweise in der von der Firma Océ Printing Systems unter der Handelsbezeichnung Prisma vertriebene Serverlösung integriert. Océ Prisma ist eine Software für intelligentes Output Management System und in der Veröffentlichung "The world of printers, Technologies of Océ Printing Systems, Dr. Gerd Goldmann (Hrsg.), Océ Printing Systems GmbH, Poing, Ed. 7 (2002), Kapitel 14, beschrieben. Einzelne Bestandteile solcher Output Management Lösungen sind in den Dokumenten WO 03/065197 A2 und WO 03/065197 A2 beschrieben.

Output Management Systeme werden insbesondere bei großen Druckdatenmengen verwendet. Das Output Management System der Druckvorstufe 17 dient insbesondere zur automatischen Annahme, Verarbeitung und Weiterleitung von Dokumentenbearbeitungsaufträgen, insbesondere von Druckaufträgen des Host-Computers 12 und des Client-Computers 14. Selbstverständlich können weitere Host-Computer und Client-Computer, die mit dem lokalen Netzwerk 16 verbunden sind, Druckaufträge zur Druckvorstufe 17 übermitteln. Die Druckvorstufe 17 ist über ein zweites lokales Netzwerk 26 mit den Hochleistungsdruckern 30, 32, 34 und 36 verbunden. Der Druckserver 18 der Druckvorstufe 17 wählt für die Ausgabe eines Druckauftrags aus den verfügbaren Hochleistungsdruckern 30 bis 36 einen geeigneten Hochleistungsdrucker aus und führt diesem einen geeigneten Druckdatenstrom zu.

Die Druckgeschwindigkeit der Hochleistungsdrucker 30 bis 36 beträgt etwa zwischen 40 Seiten bis zu über 1000 Seiten DIN A4 pro Minute. Die Druckdaten der Druckaufträge sind dabei seitenweise individuell gestaltet, wobei die Druckdaten insbesondere seitenweise aus statischen Daten und variablen Daten zusammengesetzt werden können. Der Druckserver 18 erhält die Druckaufträge, wie bereits erwähnt, von dem Host-Computer 12 und dem Client-Computer 14 und bereitet diese für den Druck auf einem geeigneten Hochleistungsdrucker 30 bis 36 auf. Falls erforderlich, konvertiert der Druckserver 18 die Druckdaten von einem ersten Datenformat in ein zweites Datenformat und überträgt die konvertierten Daten in eine dem ausgewählten Drucker zugeordnete Druckwarteschlange oder direkt zu dem ausgewählten Hochleistungsdrucker 30 bis 26 über das Netzwerk 26. Bei der Verarbeitung von Druckaufträgen in einem Druckproduktionsumfeld kommt es maßgeblich darauf an, eine möglichst performante flexible Verarbeitung der Druckaufträge zu ermöglichen, um eine hohe Auslastung der angeschlossenen Hochleistungsdrucker 30 bis 36 und damit eine hohe Produktivität zu erreichen. Zur Verarbeitung von Druckdaten können Druckaufträge auch sogenannte JOB-Tickets umfassen, in denen Begleitinformationen zu dem jeweiligen Druckauftrag, z.B. zur Verwendung von bereits existierenden Ressourcendaten, der Anzahl der zu erzeugenden Exemplare, zur Ein-/Ausgabefläche zur Warteschlange usw. hinterlegt sind.

Ein übliches Druckdatenformat für Hochleistungsdrucker 30 bis 36 ist das AFP-Datenformat (Advanced Function Presentation), welches beispielsweise in der Publikation Nr. F-544-3884-01 der Firma International Business Machines Corp. (IBM) mit dem Titel "AFP Programming Guide and Line Data Reference" beschrieben ist. Andere geeignete Formate sind beispielsweise eine Page Command Language (PCL), sowie ein "Intelligent Printer Data Stream" (IPDS).

Der Druckserver 18 umfasst eine Rasterbildverarbeitung 22 und ein Trapping-Modul 24. Die Rasterbildverarbeitung 22 des Druckservers 18 erzeugt aus den zugeführten Druckdaten in gleicher Weise Rasterbilder, wie die in den Hochleistungsdruckern 30 bis 36 angeordneten Rasterbildprozessoren. Die Rasterbildverarbeitung 22 erzeugt für jede in den Eingängsdruckdaten spezifizierte Grundfarbe ein separates Rasterbild. Alternativ oder zusätzlich erzeugt die Rasterbildverarbeitung 22 aus den zugeführten Eingangsdruckdaten Rasterbilder abhängig von der Spezifikation der Ausgabegrundfarben durch einen den Druckdaten zugeordneten Druckauftrag und/oder abhängig von den verfügbaren Ausgabefarben eines ausgewählten Hochleistungsdruckers 30 bis 36. Die mit Hilfe der Rasterbildverarbeitung 22 erzeugten Rasterbilder werden dem Trapping-Modul 24 zugeführt, um ein Trapping, d.h. ein Überfüllen, einzufärbender Bereiche der Farbauszüge zu bewirken. Zum Trapping bzw. zum Überfüllen werden die einzufärbenden Bereiche vergrößert, so dass die eingefärbten Bereiche einer Grundfarbe sicher an eine Grenzlinie zu einem benachbarten mit einer weiteren Grundfarbe eingefärbten Bereich angrenzen oder dass sich die benachbarten eingefärbten Bereiche im Randbereich überlappen, so dass im Bereich der Grenzlinie keine nichteingefärbten Bereiche vorhanden sind. Solche Trapping-Verfahren sind insbesondere aus den Dokumenten US 2003/0179394 A1, US 2005/0219631 A1, US 6,594,034 B1, US 5,581,667 A, US 6,377,711 B1, WO 95/02796, US 5,666,543 A, EP 0 833 216 A2, DE 199 12 511 A1, US 6,813,042 B2, EP 0 929 189 A2, JP 2004-262011A und aus der nicht-veröffentlichten internationalen Patentanmeldung PCT/EP 2005/027147 bekannt.

Die Rasterbildverarbeitung 22 ist ein Rastersimulierungsmodul, das vorzugsweise als Software oder als Hardwareschaltung ausgebildet ist. Die Rasterbildverarbeitung 22 bildet die Einheit eines Druckdatenstromkonverters des Druckservers oder des Hochleistungsdruckers 30 bis 36 sowie eine Bildrastereinrichtung des Hochleistungsdruckers 30 bis 36 nach und rastert die Eingangsdruckdaten in identischer Weise wie die Hochleistungsdrucker 30 bis 36 auf. Die aufgerasterten Daten umfassen Angaben der durch jeden Farbauszug einer verfügbaren Grundfarbe einzufärbenden Bereiche und werden in ein Standardformat von Rasterbilddateien, wie z.B. Bitmap oder TIFF, umgesetzt. Die von der Rasterbildverarbeitung 22 auf diese Weise erzeugten Rasterbilder werden dem Trapping-Modul 24 zum Erzeugen von Trapping-Daten zugeführt. Diese Trapping-Daten werden für Rasterbilder der Farbauszüge jeweils durchgeführt und farbauszugsbasierte Rasterbilder mit Trapping-Informationen erzeugt. Bei im Hochleistungsdruckerbereich üblichen CMYK-Farbmodellen wird für jeden Farbauszug der Grundfarben Cyan, Magenta, Gelb und Schwarz eine Trapping-Information, vorzugsweise als Rasterbildauszug, erzeugt. Im Speicher 20 werden dann die vom Host-Computer 12 oder Client-Computer 14 der Druckvorstufe 17 zugeführten Druckdaten (DS) sowie die die Farbe Cyan betreffenden ersten Trapping-Informationen (TR1), die die Farbe Magenta betreffenden Trapping-Informationen (TR2), die die Farbe Gelb betreffenden Trapping-Informationen (TR3) sowie die die Farbe Schwarz betreffenden Trapping-Informationen (TR4) gespeichert. Die im Speicher 20 gespeicherten ursprünglichen Druckdaten sowie die Trapping-Daten (TR1, TR2, TR3, TR4) werden vom Printserver 18 zu einem modifizierten Druckdatenstrom verarbeitet, der erforderlichenfalls in ein anderes geeignetes Datenformat gewandelt wird. In diesem modifizierten Druckdatenstrom sind somit die ursprünglichen, vom Host-Computer 12 oder Client-Computer 14 übertragenen Druckdaten sowie zusätzlich die Trapping-Informationen (TR1, TR2, TR3, TR4) enthalten. Der Druckserver 18 wählt einen geeigneten Hochleistungsdrucker 30 bis 36 aus und führt den modifizierten Druckdatenstrom zum Erzeugen der mit Hilfe dieser Druckdaten spezifizierten Dokumente dem ausgewählten Hochleistungsdrucker 30 bis 36 zu.

Die Rasterbildverarbeitung 22 ist vorzugsweise als Softwaremodul ausgeführt. Eine solche Rasterbildverarbeitung wird auch als TrueProof bezeichnet und dient insbesondere zur Simulation der tatsächlichen Druckausgabe. Mit Hilfe der Rasterbildverarbeitung 22 kann somit eine in einer Druckdatensprache, wie AFP, PCL oder LCDS, LPDS, vorliegender Druckdatenstrombild punktweise wiedergegeben und insbesondere visuell überprüft werden. Der Rasterprozess der Rasterbildverarbeitung 22 entspricht wie bereits erwähnt dem Druckrasterprozess eines Hochleistungsdruckers 30 bis 36.

Bei alternativen Ausführungsformen umfasst das System 10 zusätzlich oder alternativ zu den lokalen Netzwerken 16, 26 ein globales Netzwerk (WAN). Ein solches globales Netzwerk ist beispielsweise das World Wide Web des Internets. Ferner kann anstatt der zwei lokalen Netzwerke 16, 26 nur ein Netzwerk, insbesondere ein lokales Netzwerk oder ein globales Netzwerk, vorgesehen werden, mit dem dann sowohl der Host-Computer 12, der Client-Computer 14 sowie weitere Host- und Client-Computer, die Hochleistungsdrucker 30 bis 36 und die Druckvorstufe 17 mit dem Druckserver 18 verbunden sind.

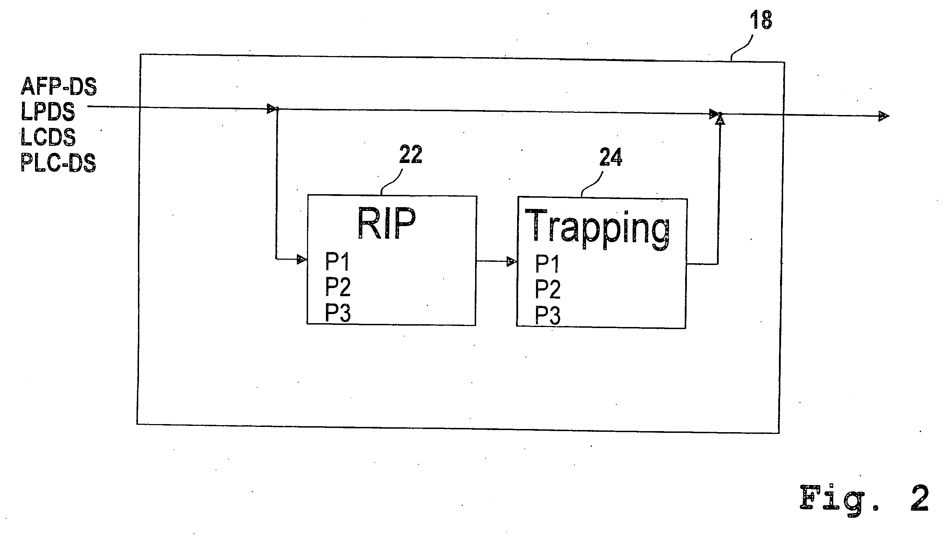

In Figur 2 ist ein Blockdiagramm zum Verarbeiten eines AFP-, LCDS-, LPDS- oder PCL-Druckdatenstroms in einem als Druckvorstufe 17 dienenden Druckserver 18 dargestellt. Die dem Druckserver 18 zugeführten Druckdaten werden der Rasterbildverarbeitung 22 zugeführt und vom Druckserver 18 vorzugsweise zwischerigespeichert. Die Rasterbildverarbeitung 22 gibt im vorliegenden Ausführungsbeispiel einen für einen Hochleistungsdrucker 30 bis 36 geeigneten Parametersatz zum Erzeugen von Rasterbildern aus den zugeführten Druckdaten aus und erzeugt abhängig vom ausgewählten Parametersatz Rasterbilder. Dabei kann bei der Rasterbildverarbeitung 22 eine Farbreduktion oder Farbanpassung auf die im Druckauftrag, auf die in den verfügbaren Hochleistungsdrucksystemen 30 bis 36 vorhandenen oder auf voreingestellte Ausgabefarben durchgeführt werden. Die Farben können dabei insbesondere auch Sonderfarben umfassen, wie z.B. die sogenannten Custom Tone-Farben der Firma Océ Printing Systems. Die Rasterbildverarbeitung 22 führt dem Trapping-Modul 24 Rasterbilder zu.

Das Trapping-Modul 24 fühlt abhängig von den im JOB-Ticket des Druckauftrags oder durch den Druckauftrag selbst spezifizierten Parametern und/oder abhängig von den sich aus den Ausgabeeigenschaften der Hochleistungsdrucker 30 bis 36 ergebenden Anforderungen an das Trapping ein Trapping der Rasterbilder durch. Dazu verwendet das Trapping-Modul 24 einen geeigneten Parametersatz. Vorzugsweise wird für jede Grundfarbe ein getrapptes, d.h. überfülltes, Rasterbild erzeugt, das vorzugsweise nur die zusätzlich mit dieser Grundfarbe einzufärbenden Bereiche umfasst, die zusätzlich zu den vom Rasterverarbeitungsprozess 22 erzeugten Rasterbildern aufgrund des Trappings einzufärben sind. Somit umfassen die Trapping-Informationen Rasterbilddaten, die nur die zusätzlich aufgrund des Trappings mit Hilfe der Grundfarben einzufärbenden Bereiche ausgeben. Das Trapping kann alternativ auch für einen Teil der Grundfarben durchgeführt werden, beispielsweise nur für eine von zwei Grundfarben, wodurch nur die einzufärbenden Bereiche dieser einen Grundfarbe in den Randbereichen zu benachbarten einzufärbenden Bereichen der weiteren Grundfarbe überfüllt, d.h. vergrößert, werden.

Die zwischengespeicherten Eingangsdruckdaten werden zusammen mit den Trapping-Informationen vom Druckserver 18 vorzugsweise in Form eines modifizierten Druckdatenstroms an den Hochleistungsdrucker 30 bis 36 übertragen. Durch das Verbleiben der ursprünglichen Druckdaten bzw. Druckinformationen im Druckdatenstrom können mit Hilfe dieser ursprünglichen unverfälschten Druckdaten weitere Druckbildverbesserungsverfahren durch den Hochleistungsdrucker 30 bis 36 selbst oder bei einer Weiterverarbeitung in der Druckvorstufe 17 durchgeführt werden. Eine flexible Anpassung der Trapping-Information an einen konkret ausgewählten Drucker 30 bis 36 ist auch zu einem späteren Zeitpunkt möglich, da die ursprünglichen Druckdaten, d. h. die Eingangsdruckdaten, noch im modifizierten Druckdatenstrom enthalten sind. Insbesondere können weitere für einen ausgewählten Hochleistungsdrucker 30 bis 36 geeignete Trapping-Daten erzeugt werden.

Alternativ können mehrere für unterschiedliche Drucker 30 bis 36 geeignete Trapping-Informationen erzeugt und dem modifizierten Druckdatenstrom hinzugefügt werden, um dann abhängig von einem konkret ausgewählten Hochleistungsdrucker 30 bis 36 eine für diesen Drucker 30 bis 36 geeignete Trapping-Information aus den im modifizierten Druckdatenstrom verfügbaren Trapping-Informationen auszuwählen. Auch ist es durch das zusätzliche Speichern der Trapping-Informationen einfach möglich, bei Druckern mit integrierten Trapping-Modulen das Trapping vom Drucker 30 selbst durchführen zu lassen, da die ursprünglichen Druckdaten weiterhin im modifizierten DDS verfügbar sind. Das Trapping kann im Druckserver 18 und somit bereits in einer Druckvorstufe 17 durchgeführt werden und beansprucht somit keine Ressourcen des Hochleistungsdruckers 30 bis 36, wodurch der Druckprozess nicht verzögert wird und eine hohe Auslastung der Hochleistungsdrucker 30 bis 36 möglich ist.

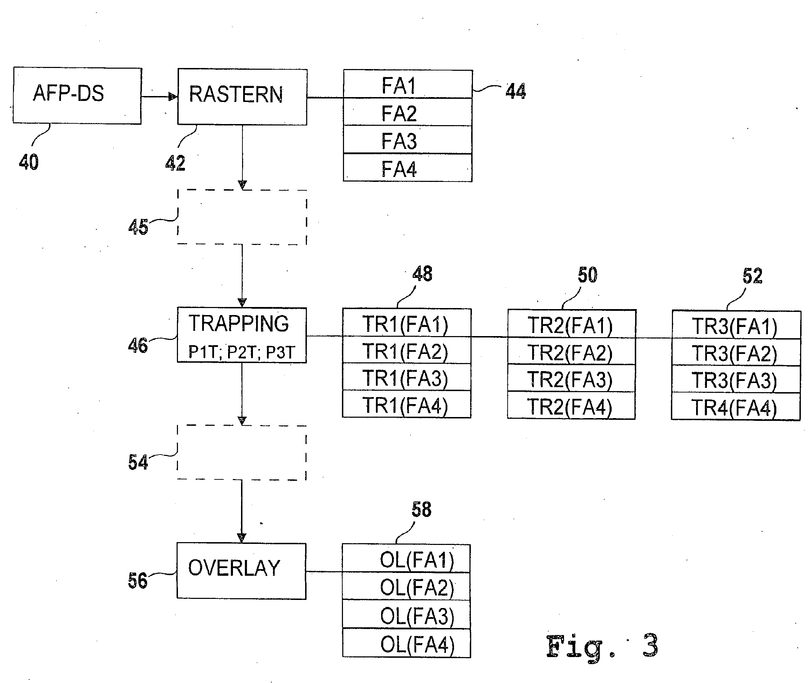

In Figur 3 ist eine Übersicht der beim Verarbeiten eines AFP-Druckdatenstroms 40 erzeugten Daten gemäß einem ersten Ausführungsbeispiel der Erfindung dargestellt. Der AFP-Druckdatenstrom 40 wird einem ersten Prozess 42 zum Erzeugen von Rasterbildern zugeführt. Die Druckdaten des AFP-Druckdatenstroms 40 beschreiben ein Druckbild, das vier Grundfarben umfasst, vorzugsweise die Grundfarben Cyan, Magenta, Gelb und Schwarz. Für jede dieser Grundfarben wird durch den Rasterprozess 42 ein Rasterbild erzeugt, die als erster Farbauszug (FA1), als zweiter Farbauszug (FA2), als dritter Farbauszug (FA3) sowie als vierter Farbauszug (FA4) in einem Speicherbereich des Speichers 20 als Rasterdaten 44 vom Rasterprozess 42 gespeichert werden.

In einem weiteren optionalen Prozess 45 können weitere Bildverbesserungsprozesse, wie eine Kantenglättung, eine Rasteranpassung, eine Farbauftragsbegrenzung und weitere Verbesserungsprozeduren, durchgeführt werden. Nachfolgend werden die Rasterdaten 44 der Farbauszüge (FA1, FA2, FA3, FA4) in einem Trapping-Prozess 46 weiterverarbeitet. Im vorliegenden Ausführungsbeispiel sind dem Trapping-Prozess drei Parametersätze P1T, P2T, P3T zugewiesen, wobei mit Hilfe jeweils eines Parametersatzes ein Trapping-Rasterbild erzeugt wird. Mit Hilfe des ersten Parametersatzes P1T werden erste Trapping-Rasterdaten TR1 (FA1), TR1 (FA2), TR1 (FA3), TR1 (FA4), mit Hilfe des zweiten Parametersatzes P2T zweite Trapping-Rasterbilddaten 50 TR2 (FA1), TR2(FA2), TR2(FA3), TR2(FA4) sowie mit Hilfe des dritten Trapping-Parametersatzes P3T dritte Trapping-Rasterbilddaten 52 TR3 (FA1), TR3(FA2), TR3(FA3), TR3(FA4) erzeugt.

Die Trapping-Rasterbilddaten 48, 50, 52 und/oder die Rasterbilddaten 44 werden in einem nachfolgenden optionalen Bildverarbeitungsprozess 54 in gleicher Weise wie im Zusammenhang mit dem Verarbeitungsprozess 45 beschrieben, verarbeitet, bei dem mindestens ein Verfahren zur Verbesserung der Druckausgabe durchgeführt wird. Anschließend wird im Prozess 56 eine Überlagerung der Rasterbilddaten 44 mit den Trapping-Rasterbilddaten 48, 50 und/oder 52 durchgeführt, wobei überlagerte Rasterbilddaten 58 (OL (FA1), OL(FA2), OL(FA3), OL (FA4)) erzeugt werden, die zur Druckausgabe verwendet werden. Diese Überlagerung kann beispielsweise durch Hinzufügen der Trapping-Rasterdaten 48, 50, 52 zu dem AFP-Druckdatenstrom 40 erfolgen, indem diese Trapping-Rasterbilddaten 48, 50, 52 dem AFP-Druckdatenstrom als das weitere Druckbild zu überlagernde Rasterbilddaten hinzugefügt werden.

Mit Hilfe eines Druckertreibers können dann insbesondere durch das Spezifizieren eines für diesen Drucker geeigneten Trapping-Parametersatzes P1T, P2T, P3T aus den verfügbaren Trapping-Rasterbilddaten 48, 50, 52 geeignete Trapping-Rasterbilddaten 48, 50, 52 ausgewählt werden, wobei nur diese zusammen mit den ursprünglichen im AFP-Druckdatenstrom 40 enthaltenen Druckdaten zum Hochleistungsdrucker 30 bis 36 übertragen werden.

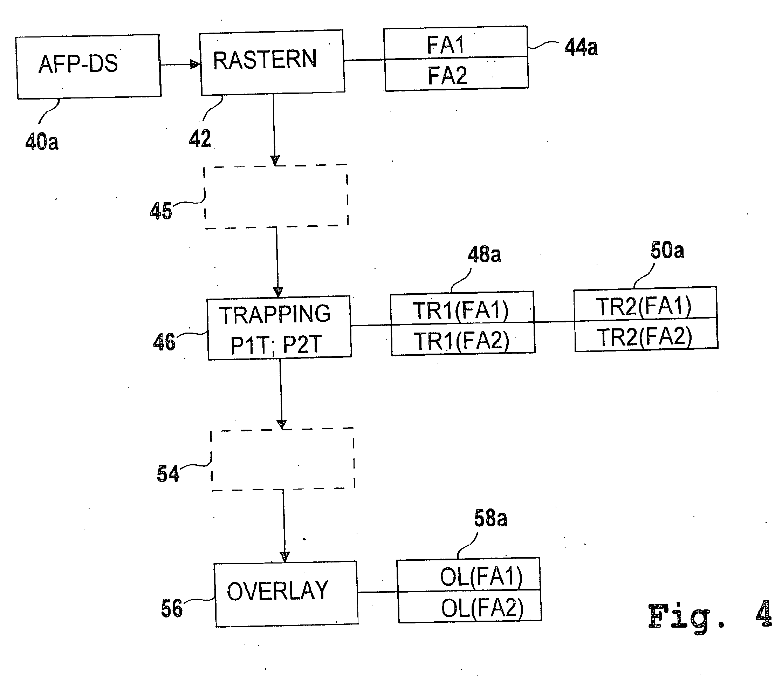

In Figur 4 ist eine Übersicht der beim Verarbeiten eines AFP-Druckdatenstroms 40a erzeugten Daten gemäß einem zweiten Ausführungsbeispiel der Erfindung dargestellt, bei dem nur zwei Grundfarben zur Ausgabe der Druckbilder genutzt werden. Diese Grundfarben sind insbesondere die Farbe Schwarz und eine Sonderfarbe. In gleicher Weise können jedoch auch zwei Grundfarben des CMYK-Farbmodells zur Ausgabe genutzt werden. Der Ablauf der einzelnen Verarbeitungsprozesse 42, 45, 46, 54, 56 erfolgt in gleicher Weise, wie im Zusammenhang mit Figur 3 beschrieben. Die Rasterbilddaten 44A, die Trapping-Rasterbilddaten 48A, 50A sowie die überlagerten Rasterbilddaten 58A stimmen für die beiden Farbauszüge des Ausführungsbeispiels nach Figur 4 mit den in Figur 3 mit der gleichen Bezugszeichenziffer bezeichneten Farbauszügen überein.

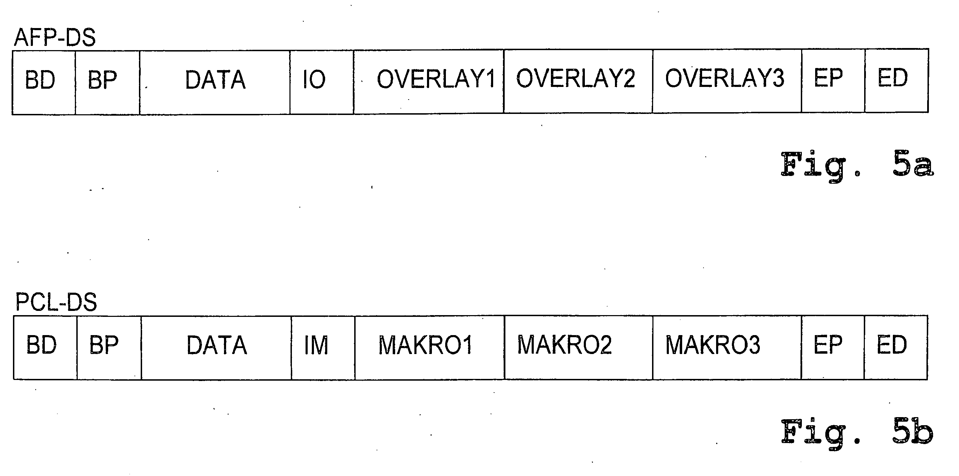

In Figur 5a ist die Struktur eines erfindungsgemäßen AFP-Druckdatenstroms dargestellt. Der schematisch dargestellte AFP-Druckdatenstrom besteht beispielhaft aus den erfindungsgemäßen Druckdaten zum Erzeugen einer Druckseite. Der Druckdatenstrom beginnt mit der Anweisung "Beginn Document" (BD) gefolgt von der Anweisung "Beginn Page" (BP). Nachfolgend schließt sich ein Datenblock mit den Druckdaten zum Erzeugen der Druckseite an, die im Wesentlichen den von dem Host-Computer 12 oder dem Client-Computer 14 zum Druckserver 18 übertragenen Druckdaten entsprechen. Erforderlichenfalls sind die in diesem Datenblock (DATA) enthaltenen Druckdaten, beispielsweise vom Druckerserver 18, in ein anderes geeignetes Datenformat konvertiert worden. Nach diesem Datenblock (DATA) schließt sich die Anweisung "Include Overlay2" (IO) an. Diese Anweisung bewirkt, dass von den drei nachfolgenden Overlay-Blöcken (OVERLAY1, OVERLAY2, OVERLAY3) das OVERLAY2 zum Überlagern der mit Hilfe der Druckdaten (DATA) erzeugten Rasterbilder mit den durch das OVERLAY2 spezifizierten Rasterbilder. Das OVERLAY2 enthält vorzugsweise Trapping-Rasterbilddaten, die mit Hilfe des zweiten Parametersatzes P2 erzeugt worden sind. Beispielsweise erweitert das OVERLAY1 die durch die Druckdaten (DATA) bestimmten einzufärbenden Bereiche in zu überfüllenden Bereichen um ein Bildpunkt bzw. jeweils um ein Pixel. Dadurch wird eine Überlappung mit einem angrenzenden mit einer weiteren Druckfarbe einzufärbenden Bereich, d. h. ein Trapping, um einen Bildpunkt erreicht. Das OVERLAY2 erweitert die einzufärbenden Bereiche in zu überfüllenden Bereichen um zwei Bildpunkte und das OVERLAY3 um drei Bildpunkte. Je nach Positioniergenauigkeit, d. h. je nach Passergenauigkeit, eines Hochleistungsdruckers 30 bis 36 kann ein für diesen Drucker geeignetes Overlay (OVERLAY1, OVERLAY2, OVERLAY3) ausgewählt und mit den durch die Druckdaten (DATA) erzeugten Druckbildern überlagert werden. Die Überlagerungsdaten (OVERLAY1, OVERLAY2, OVERLAY3) umfassen jeweils je einen Farbauszug, der durch die Druckdaten DATA beschriebenen Grundfarben oder den durch einen Drucker bereitgestellten Grundfarben. Den Überlagerungsdaten (OVERLAY3) folgen die Anweisungen "End Page" (EP) und "End Document" (ED) .

In Figur 5b ist die Struktur eines erfindungsgemäßen PCL-Druckdatenstroms schematisch dargestellt, wobei bei PCL-Datenströmen zur Überlagerung der Druckbilder der einzelnen Farbauszüge, die beim PCL-Datenstrom ebenfalls in den Druckdaten (DATA) enthalten sind, in Makros (MAKRO1, MAKRO2, MAKR03) enthaltene Druckdaten genutzt werden. Die durch die in den Makros (MAKRO1, MAKRO2, MAKRO3) enthaltenen Druckdaten beschriebenen einzufärbenden Bereiche erzeugen in gleicher Weise, wie die Überlagerungsdaten, (OVERLAY1, OVERLAY2, OVERLAY3) des AFP-Druckdatenstroms nach Fig. 5a ein Überfüllen, d. h. ein Trapping, der durch die Druckdaten (DATA) spezifizierten einzufärbenden Bereiche.

Sowohl bei dem AFP-Druckdatenstrom nach Figur 5a als auch bei dem PCL-Datenstrom nach Figur 5b wählt ein Druckertreiber eines ausgewählten Hochleistungsdruckers 30 bis 36 aufgrund der in einem JOB-Ticket enthaltenen Anweisungen und/oder Angaben über den durch den Druckertreiber spezifizierten Drucker im Druckertreiber selbst geeignete Überlagerungsdaten (OVERLAY1, OVERLAY2, OVERLAY3, MAKRO1, MAKRO2, MAKRO3) aus den verfügbaren Überlagerungsdaten aus und löscht die weiteren Überlagerungsdaten aus dem an den Drucker 30 bis 36 zu übertragenden Druckdatenstrom heraus oder fügt diese nicht dem an den Drucker 30 bis 36 zu übertragenden Druckdatenstrom hinzu. Somit ermittelt der Druckertreiber die erforderlichen Überlagerungsdaten (OVERLAY1, OVERLAY2, OVERLAY3, MAKRO1, MAKRO2, MAKRO3) und generiert einen modifizierten an den Drucker zu übertragenden Druckdatenstrom. Der modifizierte Druckdatenstrom hat einen ähnlichen beispielhaften Aufbau, wie die in Figur 5a und 5b gezeigten AFP- und PCL-Druckdatenströme. Somit sind die Trapping-Informationen in diesen Datenströmen als Bildpunktdaten enthalten, die dem jeweiligen Druckdatenstrom also Trapping-Druckdaten hinzugefügt sind. Die dem jeweiligen Datenstrom hinzugefügten Trapping-Rasterbilddaten geben vorzugsweise nur die zum Trapping zusätzlich einzufärbenden Bereiche an und nicht die gesamten einzufärbenden Bereiche, wodurch die Datenmenge zum Übertragen der Trapping-Informationen relativ gering ist.

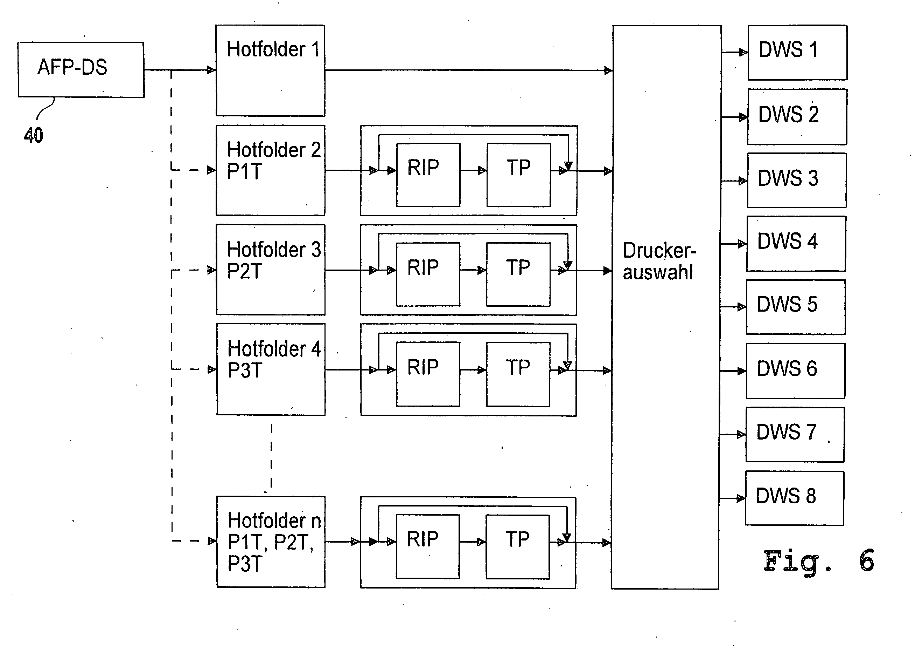

In Figur 6 ist ein Blockdiagramm zum Verarbeiten eines AFP-Druckdatenstroms in einer Druckvorstufe sowie zur Auswahl der Verarbeitungsparameter dieses AFP-Druckdatenstroms 40 gemäß einer dritten Ausführungsform der Erfindung gezeigt. Aufgrund einer entsprechenden Anweisung führt der Host-Computer 12 oder der Client-Computer 14 den AFP-Druckdatenstrom 40 einem ersten Eingangsordner (Hotfolder 1), einem zweiten Eingangsordner (Hotfolder 2), einem dritten Eingangsordner (Hotfolder 3), einem vierten Eingangsordner (Hotfolder 4) oder einem weiteren Eingangsordner (Hotfolder n) zu. Es können erforderlichenfalls weitere Eingangsordner vorgesehen werden.

Dem ersten Eingangsordner (Hotfolder 1) ist kein Trapping-Parameter zugeordnet, sodass die diesem ersten Eingangsordner zugeführten Druckdaten nicht vom Trapping-Modul (TP) des Druckservers 18 verarbeitet werden und direkt einem Druckerauswahlmodul zugeführt werden. Das Druckerauswahlmodul ordnet die Druckdaten eines Druckauftrags bzw. die angepassten Druckdaten des Druckauftrags einer Druckwarteschlange (DWS1 bis DWS8) zu, die einem zur Ausgabe der den Druckdaten entsprechenden Druckbildern geeigneten Hochleistungsdrucker zugeordnet ist. Die Druckdaten eines AFP-Druckdatenstroms 40, der dem zweiten Eingangsordner (Hotfolder 2) zugeführt wird, werden mit Hilfe des Rasterimageprozesses (RIP) zur Rasterbildern verarbeitet und anschließend dem Trapping-Modul (TP) zugeführt.

Das Trapping-Modul (TP) erzeugt abhängig von dem dem zweiten Eingangsordner (Hotfolder 2) zugeordneten Parametersatz P1T Trapping-Informationen, vorzugsweise in Form von Rasterbilddaten. Die mit Hilfe des Trapping-Moduls (TP) erzeugten Trapping-Informationen werden vom Trapping-Modul (TP) ausgegeben und den Druckdaten des ursprünglichen AFP-Druckdatenstroms 40 hinzugefügt, die während der Verarbeitung der Druckdaten durch den Rasterimageprozess (RIP) und das Trapping-Modul (TP) zwischengespeichert und vorzugsweise nicht verändert werden. Der Druckserver 18 gibt somit einen modifizierten Druckdatenstrom aus, der die in dem zugeführten AFP-Eingangsdruckdatenstrom 40 enthaltenen Druckdaten sowie die erzeugten Trapping-Informationen umfasst. Dieser Druckdatenstrom wird durch die Druckerauswahl einer Druckwarteschlange (DWS 1 bis DWS8) zugeführt, die einem Drucker zugeordnet ist, der zur Ausgabe von den Druckdaten entsprechenden Druckbildern geeignet ist.

In gleicher Weise wie im Zusammenhang mit dem zweiten Eingangsdatenordner (Hotfolder 2) wird der AFP-Druckdatenstrom 40 verarbeitet, wenn dieser dem dritten Eingangsordner (Hotfolder 3) oder dem vierten Eingangsordner (Hotfolder 4) zugeführt wird, wobei beim Speichern des Druckdatenstrom im dritten Eingangsordner (Hotfolder 3) das Trapping-Modul (TP) einen zweiten Parametersatz P2T zum Trapping verwendet. Beim Zuführen des AFP-Druckdatenstroms 40 zum vierten Eingangsordner (Hotfolder 4) wird ein dritter Parametersatz P3T zum Trapping mit Hilfe des Trapping-Moduls (TP) verwendet. Beim Zuführen AFP-Druckdatenstroms 40 zum weiteren Eingangsordner (Hotfolder n) werden vom Trapping-Modul (TP) sowohl Trapping-Informationen mit Hilfe des ersten Parametersatzes (P1T), des zweiten Parametersatzes (P2T) als auch des dritten Parametersatzes (P3T) erzeugt und dem einer Druckwarteschlange (DWS 1 bis DWS 8) zuzuführenden Datenstrom hinzugefügt.

Alternativ zur Auswahl des Eingangsordners durch den Host-Computer 12 oder den Client-Computer 14 bzw. durch ein von diesen Computern 12, 14 abgearbeiteten Anwendungsprogramm, kann ein geeigneter Eingangsordner durch ein Outputmanagement System der Druckvorstufe 17 ausgewählt werden. Alternativ zu der in Figur 6 gezeigten Integration des Rasterbildprozesses (RIP) und des Trapping-Moduls in Druckserver 18 bzw. in einem Outputmanagementsystem der Druckvorstufe 17 können der Rasterbildprozess (RIP) und/oder das Trapping-Modul (TP) außerhalb der Druckvorstufe 17 oder des Druckservers 18 angeordnet und mit der Druckvorstufe 17 bzw. dem Druckserver 18 über eine geeignete Schnittstelle zum Datenaustausch verbunden sein.

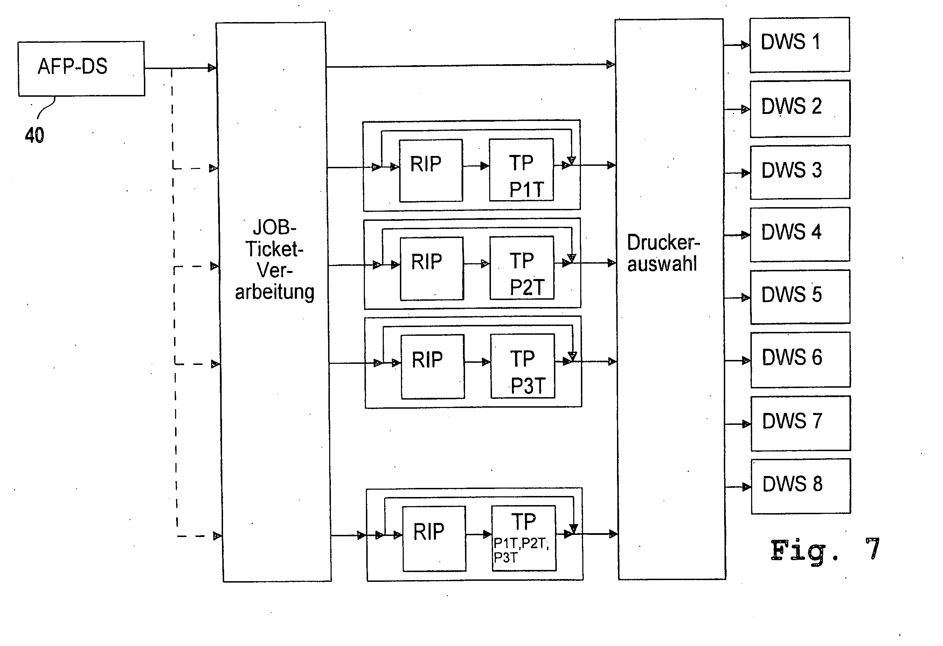

In Figur 7 ist ein Blockdiagramm zum Verarbeiten des AFP-Druckdatenstroms 40 sowie zur Auswahl der Trapping-Parameter in der Druckvorstufe 17 gemäß einer vierten Ausführungsform der Erfindung gezeigt. Im Unterschied zu der in Figur 6 dargestellten dritten Ausführungsform erfolgt die Zuordnung des AFP-Druckdatenstroms 40 zu einem Trapping-Modul bei der vierten Ausführungsform mit einem geeigneten Trapping-Parametersatz (P1T, P2T, P3T) mit Hilfe einer JOB-Ticket-Verarbeitung. Dem AFP-Druckdatenstrom 40 ist bei der vierten Ausführungsform der Erfindung ein JOB-Ticket zugeordnet, das Angaben über die Verarbeitung der im AFP.-Druckdatenstrom 40 enthaltenen Druckdaten enthält. Insbesondere enthält das JOB-Ticket auch Angaben über Parameter, die beim Rasterbildprozess (RIP) zu verwenden sind, um die im AFP-Druckdatenstrom 40 enthaltenen Druckdaten auf geeignete Art und Weise zu Rasterbildern zu verarbeiten. Diese Parameter zur Rasterbilderzeugung werden sowohl vom Rasterbildprozess in der Druckvorstufe als auch bei einer nachfolgenden Verarbeitung der Druckdaten einem Hochleistungsdrucker verwendet, der nachfolgend zum Erzeugen der durch die Druckdaten spezifizierten Druckbilder ausgewählt wird. Die JOB-Ticket-Verarbeitung entscheidet, ob das Trapping-Modul Trapping-Informationen mit Hilfe des ersten Parametersatzes (P1T), Trapping-Informationen mit Hilfe des zweiten Trapping-Parametersatzes (P2T) und/oder Trapping-Informationen mit Hilfe des dritten Parametersatzes (P3T) erzeugt. Die erzeugten Trapping-Informationen werden einem Ausgangsdruckdatenstrom hinzugefügt, der in gleicher Weise wie bei der in Verbindung mit Figur 6 beschreibenden dritten Ausführungsform der Erfindung einer Druckwarteschlange DWS 1 bis DWS 8 zugeführt wird.

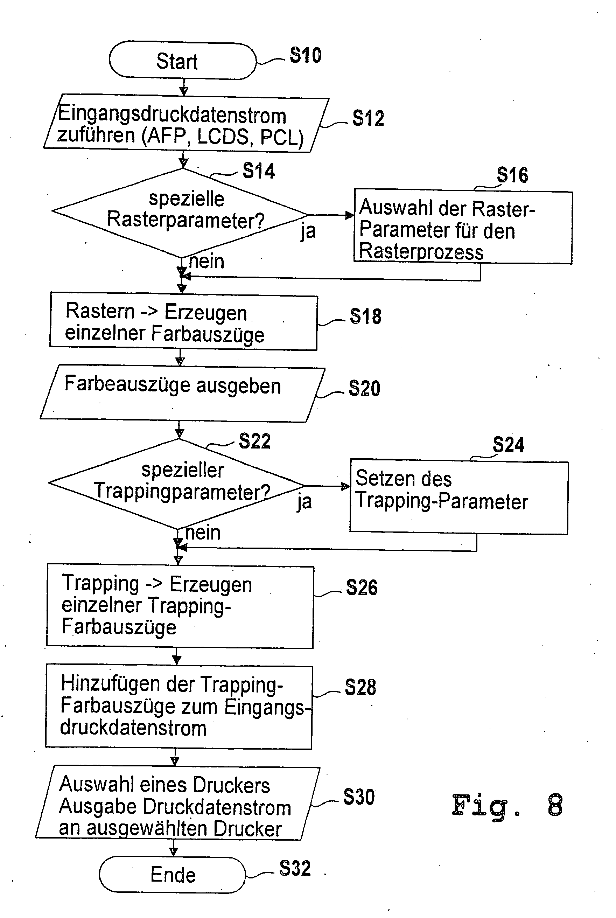

In Figur 8 ist ein Ablaufplan gemäß einer fünften Ausführungsform der Erfindung dargestellt. Der Ablauf wird im Schritt S10 gestartet. Nachfolgend wird im Schritt S12 ein Eingangsdruckdatenstrom zugeführt. Dieser Druckdatenstrom ist insbesondere ein AFP-, ein LCDS- oder ein PCL-Druckdatenstrom. Anschließend wird im Schritt S14 überprüft, ob der Eingangsdruckdatenstrom spezielle Angaben über zu verwendende Rasterparameter enthält. Ist das der Fall, so werden diese speziellen Rasterparameter im Schritt S16 bestimmt und für den nachfolgenden im Schritt S18 durchzuführenden Rasterprozess voreingestellt. Im Schritt S18 werden die Eingangsdruckdaten des zugeführten Eingangsdruckdatenstroms zu Rasterbildern verarbeitet und einzelne Farbauszüge erzeugt. Im Schritt S20 werden diese Rasterbilder an ein Trapping-Modul ausgegeben. Im Schritt S22 wird überprüft, ob spezielle Trapping-Parameter zum Trapping der zugeführten Rasterbilder vorgesehen sind, beispielsweise durch eine Angabe zu den zu verwendenden Trapping-Parametern in Eingangsdruckdatenstrom. Ist das der Fall, so wird im Schritt S24 dieser spezielle Trapping-Parameter ermittelt und gesetzt. Andernfalls bleibt ein voreingestellter Trapping-Parameter zum nachfolgenden Trapping im Schritt S26 gesetzt. Im Schritt S26 werden abhängig vom gesetzten Trapping-Parameter die zugeführten Rasterbilddaten verarbeitet und Trapping-Informationen erzeugt. Dazu werden einzelne Trapping-Farbauszüge erzeugt. Diese Trapping-Farbauszüge werden auch als Trapping-Rasterbild bezeichnet. Die Trapping-Farbauszüge werden im nachfolgenden Schritt S28 zu den im Eingangsdruckdatenstrom enthaltenen Druckdaten hinzugefügt, sodass ein modifizierter Druckdatenstrom erzeugt wird. Dieser Druckdatenstrom wird im Schritt S30 an einen ausgewählten Drucker ausgegeben. Der Ablauf ist im Schritt S32 beendet.

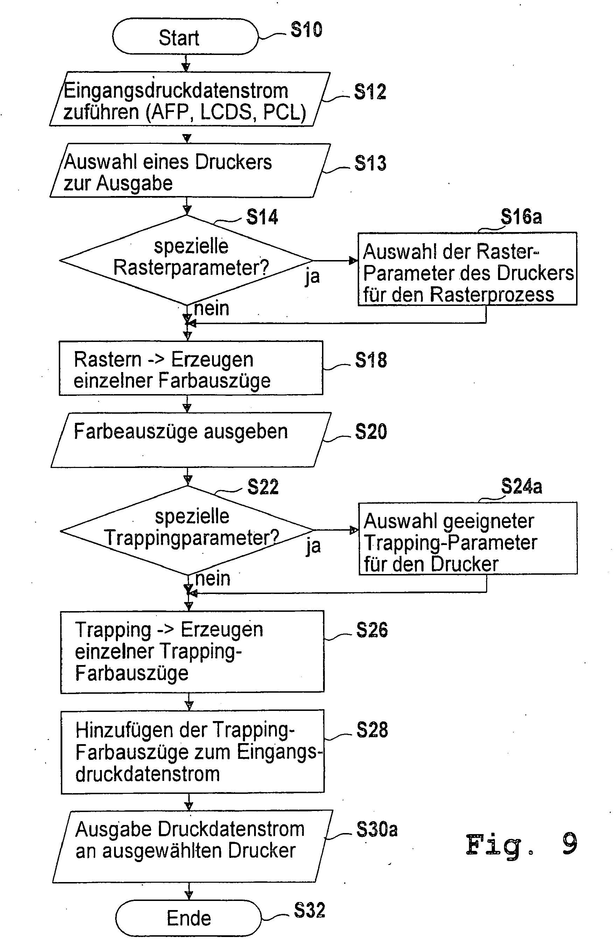

In Figur 9 ist ein Ablauf zum Verarbeiten von Eingangsdruckdaten eines Eingangsdruckdatenstroms gemäß einer sechsten Ausführungsform der Erfindung dargestellt. Der Ablauf der sechsten Ausführungsform nach Figur 9 unterscheidet sich von dem Ablauf der fünften Ausführungsform nach Figur 8 nur dadurch, dass im zusätzlichen Schritt S13 ein Drucker zur Ausgabe von den Eingangsdruckdaten entsprechenden Druckbildern ausgewählt wird. Die Druckerauswahl erfolgt somit vor dem Verarbeiten der Eingangsdruckdaten zu Trapping-Informationen. Im Schritt S16a wird im Unterschied zum Schritt S16 nach Figur 8 ein spezieller für den ausgewählten Drucker geeigneter Raster-Parameter für den nachfolgenden Rasterprozess ausgewählt und gesetzt. Im Unterschied zu dem Schritt S24 der fünften Ausführungsform der Erfindung nach Figur 8 wird im Schritt S24a ein für den im Schritt S13 ausgewählten Drucker geeigneter Trapping-Parameter ausgewählt und voreingestellt bzw. gesetzt. Im Schritt S30a erfolgt im Unterschied zum Schritt S30 nach Figur 8 keine Auswahl des Druckers sondern der modifizierte Druckdatenstrom wird an den bereits im Schritt S13 ausgewählten Drucker ausgegeben. Die Ausgabe dieses Druckdatenstroms an den ausgewählten Drucker kann dabei derart erfolgen, dass der modifizierte Druckdatenstrom einer diesem Drucker zugeordneten Druckwarteschlange zugeordnet bzw. in dieser Druckwarteschlange gespeichert wird oder alternativ dem ausgewählten Drucker direkt zugeführt wird.

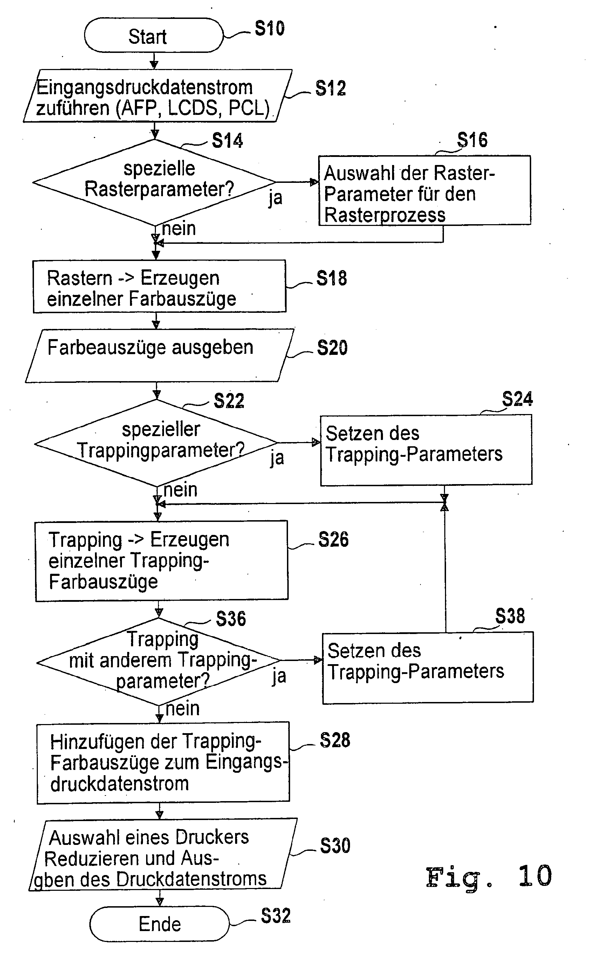

In Figur 10 ist ein Ablauf zum Verarbeiten der Eingangsdruckdaten eines Eingangsdruckdatenstroms gemäß einer siebten Ausführungsform der Erfindung ähnlich dem Ablaufplan der fünften Ausführungsform der Erfindung nach Figur 8 dargestellt. Hierbei wird im Unterschied zur fünften Ausführungsform der Erfindung im Schritt S36 überprüft, ob ein weiterer Trapping-Vorgang mit einem anderen Trapping-Parameter durchgeführt werden soll. Ist das der Fall, so wird im Schritt S28 dieser weitere Trapping-Paramter bzw. dieser weitere Trapping-Paramtersatz gesetzt, sodass beim nachfolgenden Trapping im Schritt S26 dieser Trapping-Parametersatz zum Erzeugen der Trapping-Farbauszüge bzw. des Trapping-Rasterbildes genutzt wird. Dieser Vorgang wird so lange wiederholt, bis das Trapping-Modul Trapping-Informationen zu allen voreingestellten Parametern erzeugt hat, sodass dann im Schritt S36 festgestellt wird, dass kein weiterer Trapping-Vorgang durchgeführt werden soll. Die zu den einzelnen Parametersätzen (P1T, P2T, P3T) erzeugten Trapping-Informationen werden als Trapping-Farbauszüge bzw. als Trapping-Rasterbilder dem Eingangsdatenstrom hinzugefügt, sodass ein modifizierter Druckdatenstrom ähnlich dem in den Figuren 5a und 5b gezeigten Druckdatenströmen erzeugt wird. Im Schritt S30b wird dann ein zur Ausgabe der durch den Eingangsdruckdatenstrom spezifizierten Druckbilder geeigneter Drucker ausgewählt. Abhängig von den Ausgabeeigenschaften des ausgewählten Druckers wird ein modifizierter Druckdatenstrom an diesen Drucker bzw. an eine diesem Drucker zugeordneten Druckwarteschlange ausgegeben, die ein für diesen Drucker geeignetes Trapping-Rasterbild bzw. Trapping-Farbauszüge enthält und vorzugsweise nicht die weiteren erzeugten Trapping-Bilder bzw. Trapping-Farbauszüge, die für das Trapping bei diesem Drucker nicht so geeignet sind, wie das ausgewählte Trapping-Rasterbild bzw. die ausgewählten Trapping-Rasterbilder, die dem Druckdatenstrom hinzugefügt sind.

Ein Trapping ist insbesondere bei Hochleistungsdruckern (Comercial Printers) erforderlich, denen Druckdatenströme von Kunden oder Anwendungsprogrammen zugeführt werden. Bei diesen Druckdatenströmen ist es oft auch aus Sicherheitsgründen nicht möglich, auf einzelne Objekt und auf die Zusammensetzung der Druckdatenströme Einfluss zu nehmen, um insbesondere Manipulationen der ausdruckenden Informationen auszuschließen.

Mit Hilfe der Erfindung ist es möglich, trotz einer Ungenauigkeit des Druckers beim Positionieren der Druckbilder einzelner Farbauszüge übereinander weiße Flächen zwischen zwei Farbbereichen, sogenannte Blitzer und Farbränder zu vermeiden. Insbesondere bei Postscript-Druckdatenströmen und pdf-Druckdatenströmen sind Verfahren zum Trapping im Controler eines Druckers bekannt. Bei anderen im Hochleistungsdruckerbereich verbreiteten Druckdatenströmen, wie dem bereits erwähnten AFP-Druckdatenstrom, dem LCDS-Druckdatenstrom, dem LPDS-Druckdatenstrom und dem PCL-Druckdatenstrom sind solche druckerseitigen Trapping-Verfahren nicht bekannt.

Erfindungsgemäß werden diese Druckdatenströme mit Hilfe eines Rastermoduls, dem sogenannten True Proof, gerastert und in ein Bitmap-basiertes Datenformat umgewandelt. Diese gerasterten Bilder werden dann mit Hilfe eines geeigneten Trapping-Verfahrens weiterverarbeitet. Somit wird das erfindungsgemäße Trapping dem Controler des Druckers vorgelagert, indem ein separater Rasterprozess vorgesehen wird, der den Rasterprozess des Druckers nachbildet, und die gerasterten Bilddaten dann im Trapping-Verfahren weiterverarbeitet werden. Somit wird durch die Erfindung eine druckdatenstromunabhängige und controlerunabhängige Trapping-Lösung bereitgestellt.

Zum Optimieren der Druckqualität einer Druckproduktionsstraße werden die Druckdaten eines Druckdatenstroms häufig drucker-oder druckermodellspezifisch von einem Anwenderprogramm generiert. Dies beinhaltet auch bekannte Trapping-Verfahren, die beim Erzeugen des Druckdatenstroms durch ein Anwenderprogramm mit druckerspezifischen Parametern durchgeführt wird. Ferner können druckerspezifische Grauwertkurven oder geeignete Dithermatrizen beim Erzeugen des Druckdatenstroms berücksichtigt werden.

Werden solche für einen bestimmten Drucker oder ein bestimmtes Druckermodell generierten Druckdaten auf anderen Druckern mit anderen Einstellungen oder anderen Eigenschaften zum Drucken genutzt, führt dies in der Regel zu einer schlechteren Qualität. Insbesondere ist es dadurch schwierig, einen auf einem Drucker begonnenen Druckjob zu unterbrechen und auf einem anderen Drucker eines anderen Typs fortzusetzen. Um die Druckqualität beim Ausdruck dieser Druckdaten weiterhin gewährleisten zu können muss dann in vielen Fällen ein neuer Druckdatenstrom vom Anwendungsprogramm erzeugt werden, der für den neuen Drucker optimiert ist. Alternativ müssen die Qualitätsverluste beim Fortsetzen des Druckjobs auf dem anderen Drucker in Kauf genommen werden.

Durch das erfindungsgemäße Trapping müssen bei einem Druckerwechsel die Druckdaten nicht neu vom Anwendungsprogramm erzeugt werden, sodass eine Zeitersparnis erreicht werden kann. Somit ist auch eine Qualitätsverbesserung beim Drucken mit Druckdaten möglich, die nicht für den jeweiligen Drucker optimiert worden sind. Die Erfindung ermöglicht es, die vom Anwendungsprogramm erzeugten Druckdaten weiterhin unverändert bereitzuhalten und zur Verfügung zu stellen. Weitere zusätzliche Druckdaten und/oder Parameter, die zum Durchführen qualitätsverbessernder Maßnahmen sowie zur Qualitätsverbesserung des auszugebenden Druckbildes beitragen, werden dem Druckdatenstrom hinzugefügt, um das vom Drucker ausgegebene Druckbild zu verbessern. Die zusätzlichen Druckdaten können insbesondere Rasterbildfarbauszüge, sogenannte Bitmap-Planer, sein, die die zum Trapping einzufärbenden Bereiche für den jeweiligen Farbauszug angeben.

Parameter zum Verbessern der Druckqualität eines auszugebenden Druckbildes können insbesondere Parameter zum Durchführen eines Trapping-Verfahrens, Parameter zum Durchführen eines Kantenglättungsverfahrens, mit denen die Qualität des Ausdrucks jeweils beim Drucken drucker- oder druckermodellspezifisch verbessert werden kann. Dadurch ist eine flexible Gestaltung des Workflows möglich, da ein Druckserver oder ein Output Management System festlegen kann, wann und in welchem Produktionsschritt an einen Drucker angepasste Druckdaten generiert, verarbeitet oder zur Produktionssteuerung eingesetzt werden. Auch kann eine Anpassung auf einen anderen Drucker oder ein anderes Druckermodell einfach durchgeführt werden. Ferner können beim Optimieren des Druckdatenstroms die im Druckdatenstrom oder JOB-Ticket enthaltenen Angaben zur Nachverarbeitung des erzeugten Druckbildes bzw. Druckerzeugnisses bei der Optimierung der Druckdaten berücksichtigt werden. Obgleich in den Zeichnungen und in der vorhergehenden Beschreibung bevorzugte Ausführungsbeispiele aufgezeigt und detailliert beschrieben worden sind, sollten sie lediglich als rein beispielhaft und die Erfindung nicht einschränkend angesehen werden. Es sei darauf hingewiesen, dass nur die bevorzugten Ausführungsbeispiele dargestellt und beschrieben sind und sämtliche Veränderungen und Modifizierungen, die derzeit und zukünftig im Schutzumfang der Erfindung liegen, geschützt werden sollen. Die Erfindung ist insbesondere dazu geeignet, als Computerprogramm (Software) realisiert zu werden. Sie kann damit als Computerprogramm-Modul als Datei auf einen Datenträger, wie einer Diskette, CD-ROM oder DVD, oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Aufbau kann in einem Computer, in einem Druckgerät oder in einem Drucksystem mit vorgeschalteten oder nachgeschalteten Datenverarbeitungsgeräten durchgeführt werden. Dabei können geeignete Steuer- und/oder Datenverarbeitungseinheiten, die insbesondere als Computer ausgeführt sind und mit deren Hilfe die Erfindung angewendet wird, weitere an sich bekannte technische Einrichtungen, wie Eingabemittel (Tastatur, Maus, Touchscreen) mindestens einen Microprozessor, mindestens einen Daten- und/oder Steuerungsbus, mindestens einer Anzeigeeinrichtung (Monitor, Display) sowie mindestens einen Arbeitsspeicher, einen Festplattenspeicher und eine Netzwerkkarte enthalten.

### Bezugszeichenliste

- 10: System
- 12: Host-Computer
- 14: Cient-Computer
- 16, 26: lokales Netzwerk (LAN)
- 17: Druckvorstufe
- 18: Druckserver
- 20: Speicher
- 22: Rasterbildprozess
- 24: Trapping-Modul
- 30-36: Hochleistungsdrucker
- 40, 40a: AFP-Druckdatenstrom
- 42: Rasterbildprozess
- 45, 54: optionaler Prozess
- 56: Überlagerungs-Prozess
- 44, 48, 50, 52, 58, 44a, 48a, 50a, 52a, 58a: Bilddaten

## Patentansprüche

1. Verfahren zum Aufbereiten eines Druckdatenstroms zum Erzeugen von Druckbildern mit mindestens zwei Grundfarben mit Hilfe eines Hochleistungsdrucksystems,
bei dem die in einem Eingangsdruckdatenstrom (40) enthaltenen Druckdaten einer Verarbeitungsstufe (18) als Eingangsdruckdaten zugeführt werden,
die Eingangsdruckdaten mit Hilfe der Verarbeitungsstufe (18) verarbeitet werden, wobei mindestens ein Rasterbild (FA1) einer ersten Grundfarbe erzeugt wird,
mit Hilfe des Rasterbildes (FA1) der ersten Grundfarbe mindestens eine Trapping-Information (TR1 (FA1)) erzeugt wird,
und bei dem ein Ausgangsdruckdatenstrom erzeugt wird, der die Eingangsdruckdaten und/oder die Daten des Rasterbildes der ersten Grundfarbe umfasst, und der zusätzlich zu den Eingangsdruckdaten und/oder zusätzlich zu den Daten des Rasterbildes der ersten Grundfarbe die Trapping-Information (TR1 (FA1)) aufweist, und
wobei auf die Eingangsdruckdaten und/oder auf die Daten des Rasterbildes der ersten Grundfarbe zugegriffen werden kann.

2. Verfahren nach Anspruch 1, **dadurch gekennzeichnet, dass** der Ausgangsdruckdatenstrom zur Weiterverarbeitung gespeichert oder einer weiteren Verarbeitungsstufe zugeführt wird.

3. Verfahren nach Anspruch 2, **dadurch gekennzeichnet, dass** der Ausgangsdruckdatenstrom dem Hochleistungsdrucker (30 bis 36) zugeführt wird.

4. Verfahren nach einem der vorhergehenden Ansprüche, **dadurch gekennzeichnet, dass** die Trapping-Information abhängig von mindestens einem voreingestellten Trapping-Parameter (P1T, P2T, P3T) erzeugt wird.

5. Verfahren nach einem der vorhergehenden Ansprüche, **dadurch gekennzeichnet, dass** die Eingangsdruckdaten Informationen zum Erzeugen eines mindestens zweifarbigen Druckbildes umfassen, wobei vorzugsweise ein je Rasterbild der durch die Eingangsdaten spezifizierten Grundfarben und/oder je ein Rasterbild der im Hochleistungsdrucker verfügbaren Grundfarben erzeugt wird.

6. Verfahren nach einem der vorhergehenden Ansprüche, **dadurch gekennzeichnet, dass** mit Hilfe der Eingangsdruckdaten und der erzeugten Trapping-Information oder ein modifizierter die Trapping-Informationen enthaltener Ausgangsdruckdatenstrom erzeugt wird, der vorzugsweise in einem Druckserver (18) gespeichert wird, wobei der Ausgangsdruckdatenstrom durch den Druckserver (18) einem geeigneten Hochleistungsdrucker (30 bis 36) zugeordnet wird.

7. Verfahren nach Anspruch 6, **dadurch gekennzeichnet, dass** im modifizierten Ausgangsdruckdatenstrom die im Eingangsdruckdatenstrom enthaltenen Eingangsdruckdaten und/oder das mindestens eine Rasterbild (FA1) sowie die Trapping-Information (TR1 (FA1)) enthalten sind.

8. Verfahren nach einem der vorhergehenden Ansprüche, **dadurch gekennzeichnet, dass** die Trapping-Information (TR1 (FA1)) ein Trapping-Rasterbild umfassen, das die zum Trapping mit einer Grundfarbe einzufärbenden Bereiche spezifiziert.

9. Verfahren nach Anspruch 8, **dadurch gekennzeichnet, dass** das Rasterbild (FA1) der Grundfarbe und das Trapping-Rasterbild (TR1 (FA1)) derselben Grundfarbe überlagert werden, wobei ein gemeinsames Rasterbild als Farbauszug dieser Grundfarbe erzeugt wird.

10. Verfahren nach einem der vorhergehenden Ansprüche, **dadurch gekennzeichnet, dass** das mit Hilfe der Verarbeitungsstufe (18) aus den Eingangsdaten erzeugte Rasterbild (FA1) mit einem mit Hilfe eines Rasterbildprozessors des Hochleistungsdruckers (30 bis 36) aus den Eingangsdaten erzeugten Rasterbild übereinstimmt.

11. Verfahren nach einem der vorhergehenden Ansprüche, **dadurch gekennzeichnet, dass** der Eingangsdruckdatenstrom ein LC-Druckdatenstrom, ein LD-Druckdatenstrom, ein PCL-Druckdatenstrom oder ein AFP-Druckdatenstrom ist.

12. Verfahren nach einem der vorhergehenden Ansprüche, **dadurch gekennzeichnet, dass** mindestens zwei Eingangsordner zum Zuführen eines Eingangsdruckdatenstroms vorgesehen werden, denen die Druckdaten des Druckdatenstroms wahlweise abhängig von der durchzuführenden Verarbeitung des Druckdatenstroms zugeführt werden, wobei beim Zuführen der Druckdaten des Eingangsdruckdatenstroms in den ersten Eingangsordner keine Trapping-Information erzeugt wird und beim Zuführen der Druckdaten des Eingangsdruckdatenstroms in den zweiten Eingangsordner die Trapping-Information erzeugt wird.

13. Verfahren nach Anspruch 12, **dadurch gekennzeichnet, dass** mindestens ein dritter Eingangsordner vorgesehen ist, wobei beim Zuführen der Druckdaten des Eingangsdatenstroms in den dritten Order eine Trapping-Information mit einem von einem dem zweiten Eingangsordner zugeordneten ersten Trapping-Parameter verschiedenen zweiten Trapping-Parameter erzeugt wird.

14. Vorrichtung zum Aufbereiten eines Druckdatenstroms zum Erzeugen von Druckbildern mit mindestens zwei Grundfarben mit Hilfe eines
Hochleistungsdrucksystems, umfassend
eine Verarbeitungsstufe (18),
welche die ihr mit Hilfe eines Eingangsdruckdatenstroms (40) zugeführten Eingangsdruckdaten verarbeitet und mindestens ein Rasterbild (FA1) einer ersten Grundfarbe erzeugt,
welche weiterhin mit Hilfe des Rasterbildes (FA1) der ersten Grundfarbe mindestens eine Trapping-Information (TR1 (FA1)) erzeugt, und
welche weiterhin einen Ausgangsdruckdatenstrom erzeugt, der die Eingangsdruckdaten und/oder die Daten des Rasterbildes der ersten Grundfarbe umfasst, und der zusätzlich zu den Eingangsdruckdaten und/oder zusätzlich zu den Daten des Rasterbildes der ersten Grundfarbe die Trapping-Information (TR1 (FA1)) aufweist, und
wobei die Vorrichtung Zugriff auf die Eingangsdruckdaten und/oder die Daten des Rasterbildes der ersten Grundfarbe hat.

15. Computerprogrammprodukt, umfassend Befehle und Daten in kodierter Form, die nach dem Laden des Computerprogrammprodukts eine Datenverarbeitungseinheit veranlassen, die in einem der Ansprüche 1 bis 13 genannten Verfahrensschritte auszuführen.

## Claims

1. A method for preparing a print data stream for generating print images with at least two primary colours with the aid of a high-capacity printing system,
in which the print data contained in an input print data stream (40) are supplied to a processing stage (18) as input print data,
the input print data are processed with the aid of the processing stage (18), wherein at least one raster image (FA1) of a first primary colour is generated,
at least one item of trapping information (TR1 (FA1)) is generated with the aid of the raster image (FA1),
and in which an output print data stream is generated that comprises the input print data and/or the data of the raster image of the first primary colour, and
which, in addition to the input print data and/or in addition to the data of the raster image of the first primary colour, includes the trapping information (TR1 (FA1)), and
wherein the input print data and/or the data of the raster image of the first primary colour can be accessed.

2. The method according to claim 1, **characterized in that** the output print data stream is stored for additional processing or is supplied to an additional processing stage.

3. The method according to claim 2, **characterized in that** the output print data stream is supplied to the high-capacity printer (30 to 36).

4. The method according to any of the preceding claims, **characterized in that** the trapping information is generated dependent on at least one preset trapping parameter (P1T, P2T, P3T).

5. The method according to any of the preceding claims, **characterized in that** the input print data comprise information regarding the generation of an at least two-colour print image, wherein one raster image is advantageously generated per each of the primary colours specified by the input data and/or one raster image is advantageously generated per each of the primary colours available in the high-capacity printer.

6. The method according to any of the preceding claims, **characterized in that** a modified output print data stream containing the trapping information is generated with the aid of the input print data and the generated trapping information, which modified output print data stream is advantageously stored in a print server (18), wherein the output print data stream is associated by the print server (18) with a suitable high-capacity printer (30 to 36).

7. The method according to claim 6, **characterized in that** the input print data contained in the input print data stream and/or the at least one raster image (FA1) as well as the trapping information (TR1 (FA1)) are contained in the modified output print data stream.

8. The method according to any of the preceding claims, **characterized in that** the trapping information (TR1 (FA1)) comprises a trapping raster image that specifies the regions to be inked with a primary colour for trapping.

9. The method according to claim 8, **characterized in that** the raster image (FA1) of the primary colour and the trapping raster image (TR1 (FA1)) of the same primary colour are superimposed, wherein a common raster image is generated as a colour separation of this primary colour.

10. The method according to any of the preceding claims, **characterized in that** the raster image (FA1) generated from the input data with the aid of the processing stage (18) coincides with a raster image generated from the input data with the aid of a raster image processor of the high-capacity printer (30 to 36).

11. The method according to any of the preceding claims, **characterized in that** the input print data stream is an LC print data stream, an LD print data stream, a PCL print data stream or an AFP print data stream.

12. The method according to any of the preceding claims, **characterized in that** at least two input folders are provided to supply an input print data stream, to which input folders the print data of the print data stream is selectively supplied depending on the processing of the print data stream to be carried out, wherein no trapping information is generated upon supplying the print data of the input print data stream to the first input folder and the trapping information is generated upon supplying the print data of the input print data stream to the second input folder.

13. The method according to claim 12, **characterized in that** at least one third input folder is provided, wherein trapping information is generated with a second trapping parameter differing from the first trapping parameter associated with the second input folder upon supplying the print data of the input data stream into the third folder.

14. A device for preparing a print data stream for generating print images with at least two primary colours with the aid of a high-capacity printing system, comprising
a processing stage (18),
which processes the input print data supplied to it with the aid of an input print data stream (40) and generates at least one raster image (FA1) of a first primary colour,
which further generates at least one item of trapping information (TR1 (FA1)) with the aid of the raster image (FA1) of the first primary colour, and
which further generates an output print data stream that comprises the input print data and/or the data of the raster image of the first primary colour and that, in addition to the input print data and/or in addition to the data of the raster image of the first primary colour, has the trapping information (TR1 (FA1)), and
wherein the device has access to the input print data and/or the data of the raster image of the first primary colour.

15. A computer program product, comprising commands and data in encoded form that, after loading the computer program product, prompt a data processing unit to execute the method steps cited in any of the claims 1 to 13.

## Revendications

1. Procédé de préparation d'un flux de données d'impression pour générer des images d'impression ayant au moins deux couleurs fondamentales à l'aide d'un système d'impression à grande performance,
dans lequel les données d'impression contenues dans un flux de données d'impression d'entrée (40) sont amenées en tant que données d'impression d'entrée à un étage de traitement (18),
les données d'impression d'entrée sont traitées à l'aide de l'étage de traitement (18), au moins une image de trame (FA1) d'une première couleur fondamentale étant générée,
au moins une information de défonce (TR1 (FA1)) est générée à l'aide de l'image de trame de la première couleur fondamentale,
et dans lequel un flux de données d'impression de sortie est généré qui comporte les données d'impression d'entrée et/ou les données de l'image de trame de la première couleur fondamentale et qui comporte, en plus des données d'impression d'entrée et/ou en plus des données de l'image de trame de la première couleur fondamentale, les informations de défonce (TR1 (FA1)), et
les données d'impression d'entrée et/ou les données de l'image de trame de la première couleur fondamentale étant accessibles.

2. Procédé selon la revendication 1, **caractérisé en ce que** le flux de données d'impression de sortie est mémorisé pour être traité ultérieurement ou est amené à un autre étage de traitement.

3. Procédé selon la revendication 2, **caractérisé en ce que** le flux de données d'impression de sortie est amené à l'appareil d'impression à haute performance (30 à 36).

4. Procédé selon l'une des revendications précédentes, **caractérisé en ce que** l'information de défonce est générée en fonction d'au moins un paramètre de défonce préréglé (P1T, P2T, P3T).

5. Procédé selon l'une des revendications précédentes, **caractérisé en ce que** les données d'impression d'entrée comportent des informations pour générer au moins une image d'impression bicolore, une image de trame des couleurs fondamentales spécifiées par les données d'entrée et/ou une image de trame des couleurs fondamentales disponibles dans l'appareil d'impression à haute performance étant de préférence générée à chaque fois.

6. Procédé selon l'une des revendications précédentes, **caractérisé en ce que** à l'aide des données d'impression d'entrée et de l'information de défonce générée il est généré un flux de données d'impression de sortie modifié qui contient les informations de défonce et qui est de préférence mémorisé dans un serveur d'impression (18), le flux de données d'impression de sortie étant associé par le biais du serveur d'impression (18) à un appareil d'impression à haute performance approprié (30 à 36).

7. Procédé selon la revendication 6, **caractérisé en ce que** les données d'impression d'entrée contenues dans le flux de données d'impression d'entrée et/ou l'au moins une image de trame (FA1) ainsi que l'information de défonce (TR1 (FA1)) sont contenus dans le flux de données d'impression de sortie modifié.

8. Procédé selon l'une des revendications précédentes, **caractérisé en ce que** l'information de défonce (TR1 (FA1)) comporte une image de trame de défonce qui spécifie les zones à encrer pour la défonce avec une couleur fondamentale.

9. Procédé selon la revendication 8, **caractérisé en ce que** l'image de trame (FA1) de la couleur fondamentale et l'image de trame de défonce (TR1 (FA1)) de la même couleur fondamentale sont superposées de façon à générer une image de trame commune en tant que séparation chromatique de cette couleur fondamentale.

10. Procédé selon l'une des revendications précédentes, **caractérisé en ce que** l'image de trame (FA1) générée à partir des données d'entrée à l'aide de l'étage de traitement (18) coïncide avec une image de trame générée à partir des données d'entrée à l'aide d'un processeur d'image de trame de l'appareil d'impression à haute performance (30 à 36).

11. Procédé selon l'une des revendications précédentes, **caractérisé en ce que** le flux de données d'impression d'entrée est un flux de données d'impression LC, un flux de données d'impression LD, un flux de données d'impression PCL ou un flux de données d'impression AFP.

12. Procédé selon l'une des revendications précédentes, **caractérisé en ce qu'**il est prévu au moins deux sélecteurs d'entrée qui sont destinés à amener un flux de données d'impression d'entrée et auxquels les données d'impression du flux de données d'impression sont amenées sélectivement en fonction du traitement à effectuer sur le flux de données d'impression, aucune information de défonce n'étant générée lorsque les données d'impression du flux de données d'impression d'entrée sont amenées dans le premier sélecteur d'entrée et l'information de défonce étant générée lorsque les données d'impression du flux de données d'impression d'entrée sont amenées dans le deuxième sélecteur d'entrée.

13. Procédé selon la revendication 12, **caractérisé en ce qu'**il est prévu au moins un troisième sélecteur d'entrée, une information de défonce, comportant un deuxième paramètre de défonce différent du premier paramètre de défonce associé au deuxième sélecteur d'entrée, étant générée lorsque les données d'impression du flux de données d'impression d'entrée sont amenées dans le troisième sélecteur.

14. Dispositif de préparation d'un flux de données d'impression pour générer des images d'impression ayant au moins deux couleurs fondamentales à l'aide d'un système d'impression à haute performance, ledit dispositif comportant
un étage de traitement (18),
qui traite les données d'impression d'entrée qui lui ont été amenées à l'aide d'un flux de données d'impression d'entrée (40) et qui génère au moins une image de trame (FA1) d'une première couleur fondamentale,
qui génère en outre au moins une information de défonce (TR1 (FA1)) à l'aide de l'image de trame (FA1) de la première couleur fondamentale, et
qui génère en outre un flux de données d'impression de sortie qui comporte les données d'impression d'entrée et/ou les données de l'image de trame de la première couleur fondamentale, et qui comporte, en plus des données d'impression d'entrée et/ou en plus des données de l'image de trame de la première couleur fondamentale, l'information de défonce (TR1 (FA1)), et
le dispositif ayant accès aux données d'impression d'entrée et/ou aux données de l'image de trame de la première couleur fondamentale.

15. Logiciel, comportant des instructions et des données sous forme codée qui, après le chargement du logiciel, ordonne à une unité de traitement de données d'exécuter les étapes de procédé mentionnées dans l'une des revendications 1 à 13.
